# EUROPÄISCHE PATENTSCHRIFT

(11) **EP 3 519 709 B1**
(45) Veröffentlichungstag und Bekanntmachung des Hinweises auf die Patenterteilung: **03.11.2021**
(21) Anmeldenummer: 17778256.2
(22) Anmeldetag: 29.09.2017
(51) Int. Cl.: F16C 7/06, F02B 75/04

(54) **LÄNGENVERSTELLBARES PLEUEL MIT ANSCHLAGFLÄCHEN**
CONNECTING ROD ADJUSTABLE IN LENGTH AND HAVING STOP SURFACES
BIELLE RÉGLABLE EN LONGUEUR ET PRÉSENTANT DES SURFACES DE BUTÉE

(30) Priorität: 30.09.2016 AT 508892016; 30.09.2016 AT 508902016; 10.03.2017 AT 501912017
(43) Veröffentlichungstag der Anmeldung: 07.08.2019
(73) Patentinhaber: AVL List GmbH, 8020 Graz (AT)
(72) Erfinder: AUSSERHOFER, Norbert, 8045 Graz (AT); KROBATH, Andreas, 8503 St. Josef / Weststeiermark (AT); PRAMBERGER, Harald, 8054 Graz (AT)
(74) Vertreter: Hahner, Ralph
(86) Internationale Anmeldenummer: PCT/EP2017/074841
(87) Internationale Veröffentlichungsnummer: WO 2018/060458

(56) Entgegenhaltungen:
- WO-A1-2012/113349
- WO-A1-2013/092364
- US-A1- 2004 187 634
- US-A1- 2016 222 880
- US-B2- 9 670 952

## Beschreibung

Die Erfindung betrifft ein längenverstellbares Pleuel für eine Hubkolbenmaschine, insbesondere für eine Hubkolbenbrennkraftmaschine, wobei das Pleuel zumindest einen ersten Pleuelteil und einen zweiten Pleuelteil aufweist, wobei der zweite Pleuelteil an seinem dem ersten Pleuelteil zugewandten Ende einen Abschnitt mit einem Führungszylinder aufweist, wobei der erste Pleuelteil an seinem dem zweiten Pleuelteil zugewandten Ende einen korrespondierend zum Führungszylinder ausgebildeten Führungsschaft aufweist, wobei der Führungsschaft des ersten Pleuelteils in einem funktionsgemäßen Verwendungszustand des Pleuels zumindest teilweise vom Führungszylinder aufgenommen ist und zum Verstellen einer wirksamen Pleuellänge relativ zu diesem bewegbar ist, insbesondere entlang einer Längsachse des Pleuels.

Des Weiteren betrifft die vorliegende Erfindung eine Hubkolbenmaschine, insbesondere eine Hubkolbenbrennkraftmaschine, mit wenigstens einem längenverstellbaren Pleuel sowie ein Fahrzeug mit einer Hubkolbenmaschine, insbesondere mit einer Hubkolbenbrennkraftmaschine.

Als Pleuel wird üblicherweise und auch im Sinne der Erfindung das stangenartige Verbindungselement bezeichnet, welches bei einer Hubkolbenmaschine zur Verbindung der Kurbelwelle mit einem Hubkolben dient. Das Pleuel dient dabei dazu, eine lineare Bewegung des Hubkolbens, insbesondere eine linear-oszillierende Axialbewegung des Hubkolbens, bei dem es sich in der Regel um einen Kraft- oder Arbeitskolben handelt, in eine kreisförmige Bewegung der Kurbelwelle umzuwandeln, oder umgekehrt eine kreisförmige Bewegung der Kurbelwelle in eine lineare Bewegung des Hubkolbens umzusetzen.

Als Kurbelwelle im Sinne der Erfindung wird eine Welle bezeichnet, welche dazu ausgebildet ist, vorzugsweise in einer Hubkolbenmaschine die linear-oszillierende Bewegung, insbesondere die translatorische Bewegung, eines oder mehrerer Hubkolben, insbesondere mit Hilfe von Pleueln, in eine Drehbewegung umzusetzen oder umgekehrt, eine Drehbewegung in eine translatorische Bewegung umzuwandeln.

Zur Verbindung mit dem Hubkolben und der Kurbelwelle weist ein Pleuel in der Regel an seinen beiden Enden jeweils ein Pleuellager auf, üblicherweise in Form eines Pleuelauges, wobei das Pleuel in der Regel ein kleineres Pleuelauge am kolbenseitigen Ende und ein größeres Pleuelauge am kurbelwellenseitigen Ende aufweist, bezogen auf einen funktionsgemäßen Einbauzustand eines Pleuels in einer Hubkolbenmaschine. Mithilfe eines im kleinen Pleuelauge gelagerten Kolbenbolzen kann am kolbenseitigen Ende des Pleuels ein Hubkolben angebunden werden. Über das größere Pleuelauge kann das Pleuel an der Kurbelwelle angebunden werden, wobei im größeren Pleuelauge üblicherweise ein als Gleitlager ausgebildetes Pleuellager angeordnet ist, welches mit Hydraulikmedium, insbesondere mit dem Motoröl einer Hubkolbenmaschine, geschmiert werden kann.

Das Pleuel ist dabei in der Regel jeweils um eine Drehachse drehbar um die Kurbelwelle und den Kolbenbolzen gelagert, wobei der Abstand zwischen den beiden Drehachsen eine wirksame bzw. effektive Pleuellänge definiert. Durch eine Änderung der wirksamen Pleuellänge, insbesondere durch ein Verstellen der wirksamen Pleuellänge, kann in einer Hubkolbenmaschine das Verdichtungsverhältnis verändert werden, da die Änderung der wirksamen Pleuellänge eine Verschiebung des oberen Totpunkts der Kolbenbewegung bewirkt.

Längenverstellbare Pleuel werden daher insbesondere bei Hubkolbenmaschinen mit variablem Verdichtungsverhältnis zum Einstellen des Verdichtungsverhältnisses eingesetzt. Das Ändern des Verdichtungsverhältnisses durch Verändern der wirksamen Pleuellänge ist aus dem Stand der Technik grundsätzlich bekannt, beispielsweise aus der DE 10 2012 020 999 A1 oder der WO 2015/055582 A2.

Das in der DE 10 2012 020 999 A1 beschriebene längenverstellbare Pleuel weist einen im kleineren Pleuelauge angeordneten Exzenter auf, wobei zum Verstellen des Exzenters zwei zumindest teilweise außerhalb des Pleuelschaftes angeordnete Hydraulikzylinder vorgesehen sind, die mit Motoröl aus der Hubkolbenmaschine mit Hydraulikmedium versorgt werden können. Zur Steuerung der beiden Hydraulikzylinder und damit zur Längenverstellung des Pleuels ist eine Steuerungseinrichtung mit zwei Ventilen vorgesehen, mittels welcher die beiden Hydraulikzylinder jeweils derart mit Hydraulikmedium beaufschlagt werden können, dass sich die gewünschte Änderung der Pleuellänge einstellt.

Aus der WO 2015/055582 A2 ist ein längenverstellbares Pleuel mit einer hydraulischen Längenverstelleinrichtung mit einem innerhalb des Pleuels angeordneten Hydraulikzylinder bekannt, wobei das Pleuel einen ersten Pleuelschaftabschnitt und einen zweiten Pleuelschaftabschnitt aufweist, welche entlang einer Längsachse des Pleuels relativ zueinander verschiebbar sind und insbesondere teleskopartig ineinander und auseinander geschoben werden können. Einer der beiden Pleuelschaftabschnitte bildet dabei den Hydraulikzylinder der Längenverstelleinrichtung und der andere Pleuelschaftabschnitt einen zugehörigen Hydraulikkolben. Zur Steuerung der Längenverstelleinrichtung ist eine hydraulisch betätigbare Steuerungseinrichtung mit einem senkrecht zur Kurbelwellenachse in einer Längsmittelebene des Pleuels axial verschiebbaren, einfach wirkenden Stellkolben als Stellelement vorgesehen. Der Stellkolben kann in einem funktionsgemäßen Verwendungszustand des Pleuels in einer Hubkolbenmaschine mithilfe des in einer zugehörigen Hubkolbenmaschine anliegenden Motoröldrucks entgegen einer mittels einer Rückstellfeder erzeugten Rückstellkraft von einer ersten Stellposition in eine zweite Stellposition axial verschoben werden, wobei je nach Stellposition des Stellkolbens ein oder mehrere Hydraulikzuflüsse bzw. Hydraulikabflüsse der hydraulischen Längenverstelleinrichtung freigegeben oder gesperrt sind. Über die Federsteifigkeit der Rückstellfeder kann eingestellt werden, ab welchem Motoröldruck eine Verschiebung des Stellkolbens von der ersten Stellposition in die zweite Stellposition bewirkt werden soll.

Aus dem Stand der Technik sind diverse Konzepte zur Längenverstellung einer Pleuelstange bekannt, insbesondere verschiedene Konzepte zur Steuerung einer solchen Längenverstelleinrichtung bekannt sowie verschiedene Konzepte hinsichtlich der Konstruktion des Pleuels an sich. Die US 2016/222880 A1 zeigt ein längenverstellbares Pleuel gemäß dem Oberbegriff der Ansprüche 1 und 3.

Eine Herausforderung bei längenverstellbaren Pleueln besteht unter anderem darin, die für einen Betrieb in einer Hubkolbenmaschine, insbesondere in einer Hubkolbenbrennkraftmaschine für ein Fahrzeug, erforderliche Pleuelfestigkeit zu erreichen.

Eine weitere Herausforderung ist ferner, eine eingestellte wirksame Pleuellänge über einen definierten Zeitraum konstant aufrechtzuerhalten, um über den definierten Zeitraum ein konstantes Verdichtungsverhältnis einstellen zu können.

Es ist daher eine Aufgabe der Erfindung, ein alternatives, längenverstellbares Pleuel für eine Hubkolbenmaschine bereitzustellen, vorzugsweise ein verbessertes längenverstellbares Pleuel, insbesondere ein Pleuel, mit dem ohne eine nennenswerte Gewichtserhöhung die erforderliche Pleuelfestigkeit erreicht werden kann und/oder dessen wirksame Pleuellänge über einen längeren definierten Zeitraum konstant gehalten werden kann. Darüber hinaus ist es eine Aufgabe der Erfindung, eine alternative Hubkolbenmaschine bereitzustellen, insbesondere eine verbesserte Hubkolbenmaschine, sowie ein alternatives Fahrzeug mit einer Hubkolbenmaschine, insbesondere ein verbessertes Fahrzeug.

Diese Aufgaben werden erfindungsgemäß durch die Lehre der unabhängigen Patentansprüche 1 und 3 gelöst. Bevorzugte Weiterbildungen der Erfindung sind Gegenstand der Unteransprüche und werden im Folgenden näher erläutert. Der Wortlaut der Ansprüche wird zum Inhalt der Beschreibung gemacht.

Bei einem erfindungsgemäßen Pleuel weisen der erste Pleuelteil eine erste Anschlagfläche und der zweite Pleuelteil eine zweite Anschlagfläche auf, wobei ein Anliegen der ersten Anschlagfläche an der zweiten Anschlagfläche eine Relativbewegung in eine erste Richtung begrenzt. Erfindungsgemäß ist das Pleuel derart ausgestaltet, dass beim Anliegen der ersten Anschlagfläche an der zweiten Anschlagfläche, insbesondere bei minimaler wirksamer Pleuellänge, zumindest ein Anteil einer auf das Pleuel entlang der Längsachse des Pleuels wirkenden Druckkraft am Führungsschaft vorbei über die erste Anschlagfläche und die zweite Anschlagfläche vom ersten Pleuelteil in den zweiten Pleuelteil übertragen wird und/oder umgekehrt.

Durch die beiden erfindungsgemäß vorhandenen Anschlagflächen hat ein erfindungsgemäßes Pleuel den Vorteil, dass, insbesondere bei minimaler wirksamer Pleuellänge, d.h. insbesondere in einem maximal "zusammengeschobenen Zustand" des Pleuels, zumindest ein Anteil einer auf das Pleuel entlang der Längsachse des Pleuels wirkenden Druckkraft vom ersten Pleuelteil in den zweiten Pleuelteil und/oder umgekehrt am Führungsschaft vorbei übertragen werden kann. Dadurch kann eine auf den Führungsschaft wirkende Druckkraft reduziert werden und der Führungsschaft kann entlastet werden. Insbesondere kann die Gefahr des Knickens des Führungsschaftes reduziert werden, in einigen Fällen sogar vollständig vermieden werden.

Infolgedessen kann der Führungsschaft geringer dimensioniert werden. Insbesondere kann ein Querschnitt des Führungsschaftes zumindest über einen Teil seiner Länge kleiner gewählt werden, so dass der Führungsschaft in diesem Bereich weniger Bauraum benötigt, wodurch sich eine vorteilhaftere Ausgestaltung einer hydraulischen Längenverstelleinrichtung realisieren lässt.

Der Führungszylinder eines erfindungsgemäßen, längenverstellbaren Pleuels kann als senkrechter Kreiszylinder ausgebildet sein oder alternativ als allgemeiner Zylinder. Das heißt mit anderen Worten, der Führungszylinder eines erfindungsgemäßen, längenverstellbaren Pleuels kann einen kreisrunden oder einen von einer kreisrunden Form abweichenden Querschnitt über seine axiale Länge aufweisen, insbesondere jede beliebige Querschnittsform, und als schiefer oder senkrechter Zylinder ausgebildet sein. Wichtig ist lediglich, dass der Führungszylinder und der Führungsschaft derart ausgebildet sind, insbesondere derart korrespondierend zueinander, dass die zum Verstellen der wirksamen Pleuellänge erforderliche Funktionalität erreicht werden kann.

Vorzugsweise ist der Führungszylinder eines erfindungsgemäßen längenverstellbaren Pleuels als allgemeiner Hohlzylinder mit wenigstens einer Bodenfläche ausgebildet, insbesondere als senkrechter Hohlzylinder mit einer normal zu einer Längsachse des Hohlzylinders angeordneten Bodenfläche. Vorzugsweise fällt die Längsachse des Führungszylinders dabei mit der Längsachse des Pleuels zusammen. Besonders bevorzugt ist die Bodenfläche des Hohlzylinders kreisförmig oder rechteckig ausgebildet. Grundsätzlich ist jedoch jede beliebige Geometrie für die Bodenfläche möglich. Der Hohlzylinder ist vorzugsweise offen oder zumindest teilweise geschlossen ausgebildet. Besonders bevorzugt ist der Führungszylinder zumindest teilweise becherglasförmig oder sacklochförmig ausgebildet.

Vorzugsweise ist der erste Pleuelteil, insbesondere der Führungsschaft des ersten Pleuelteils, verschiebbar im zweiten Pleuelteil gelagert, insbesondere im Führungszylinder, wobei zum Verstellen der wirksamen Pleuellänge bevorzugt der Führungsschaft des ersten Pleuelteils zumindest teilweise in den Führungszylinder des zweiten Pleuelteils eingeschoben und/oder aus diesem herausgezogen werden kann. Vorzugsweise sind der erste Pleuelteil und der zweite Pleuelteil zum Verstellen der wirksamen Pleuellänge teleskopartig relativ zueinander verschiebbar, wobei im Sinne der Erfindung unter einem teleskopartigen, relativen Verschieben zueinander ein Ineinanderschieben und/oder Auseinanderziehen entlang einer gemeinsamen Verschiebeachse verstanden wird, insbesondere ohne eine Rotation eines oder mehrerer der zugehörigen Bauteile um die Verschiebeachse. In einigen Fällen ist es vorteilhaft, wenn der Führungsschaft und der Führungszylinder teleskopartig ineinandergeschoben oder auseinandergezogen werden können.

In einigen Fällen kann es auch vorteilhaft sein, wenn der Führungsschaft und der Führungszylinder spindelartig ineinandergeschoben oder auseinandergezogen werden können, insbesondere relativ zueinander entlang einer gemeinsamen Verschiebeachse mit einer Rotation von Führungsschaft und/oder Führungszylinder um die Verschiebeachse herum. In diesem Fall ist das Pleuel vorzugsweise jedoch derart ausgebildet, dass sich der erste Pleuelteil und der zweite Pleuelteil dabei nicht um die Verschiebeachse drehen, sondern lediglich entlang dieser relativ zueinander bewegen, d.h. lediglich translatorisch. Dies kann über eine entsprechende Lagerung von Führungsschaft und/oder Führungszylinder im jeweils zugehörigen Pleuelteil erreicht werden.

In einer vorteilhaften Ausgestaltung eines erfindungsgemäßen Pleuels ist das Pleuel derart ausgestaltet, dass ein Anliegen der ersten Anschlagfläche an der zweiten Anschlagfläche eine eine Verkürzung der wirksamen Pleuellänge bewirkende Relativbewegung zwischen dem ersten Pleuelteil und dem zweiten Pleuelteil begrenzt. Insbesondere ist ein erfindungsgemäßes Pleuel derart ausgestaltet, dass ein Anliegen der ersten Anschlagfläche an der zweiten Anschlagfläche ein Ineinanderschieben des ersten Pleuelteils und des zweiten Pleuelteils begrenzt und damit eine Verringerung, insbesondere eine (weitere) Verkürzung, der wirksamen Pleuellänge begrenzt.

In einer weiteren vorteilhaften Ausgestaltung eines erfindungsgemäßen Pleuels weist der erste Pleuelteil und/oder der zweite Pleuelteil wenigstens ein Element eines Pleuellagers auf, vorzugsweise ein Pleuelauge, wobei der erste Pleuelteil insbesondere dazu eingerichtet ist, mit einem Hubkolben einer Hubkolbenbrennkraftmaschine verbunden zu werden. Der zweite Pleuelteil ist insbesondere dazu eingerichtet, mit einer Kurbelwelle einer Hubkolbenbrennkraftmaschine verbunden zu werden. Vorzugsweise weist der erste Pleuelteil ein kleineres Pleuelauge auf, welches insbesondere ein Kolbenbolzenlager bildet. Der zweite Pleuelteil weist vorzugsweise ein größeres Pleuelauge auf, welches insbesondere als Kurbelwellenlager dient.

Zur Verbindung mit einem Hubkolben einer Hubkolbenmaschine, insbesondere einer Hubkolbenbrennkraftmaschine, kann der erste Pleuelteil, insbesondere mittels eines Pleuelauges, vorzugsweise auf aus dem Stand der Technik hinreichend bekannte Art und Weise mithilfe eines Kolbenbolzens mit dem Hubkolben einer Hubkolbenmaschine verbunden werden. Alternativ kann der erste Pleuelteil fest mit einem Kolbenbolzen verbunden sein, wobei in diesem Fall ein mit dem Pleuel zu verbindender Hubkolben einer Hubkolbenmaschine ein entsprechendes Auge aufweist, von welchem der mit dem Pleuel fest verbundene Kolbenbolzen aufgenommen werden kann und in welchem der fest mit dem Pleuel verbundene Kolbenbolzen insbesondere gelagert werden kann.

Der zweite Pleuelteil ist vorzugsweise zur Anbindung an einer Kurbelwelle einer Hubkolbenmaschine ausgebildet und kann vorzugsweise, wie im Stand der Technik üblich, mithilfe eines größeren Pleuelauges an der Kurbelwelle angebunden werden.

In einer weiteren vorteilhaften Ausgestaltung eines erfindungsgemäßen Pleuels weist das Pleuel eine hydraulische Längenverstelleinrichtung zum Verstellen der wirksamen Pleuellänge auf, wobei die Längenverstelleinrichtung vorzugsweise wenigstens einen Hydraulikzylinder mit einem Kolben, einem ersten hydraulischen Arbeitsraum und einem zweiten hydraulischen Arbeitsraum aufweist, wobei der Kolben der Längenverstelleinrichtung insbesondere Teil des ersten Pleuelteils ist und der Hydraulikzylinder insbesondere Teil des zweiten Pleuelteils.

Die Längenverstelleinrichtung eines erfindungsgemäßen Pleuels kann grundsätzlich auf verschiedenste Arten und Weisen ausgebildet sein, beispielsweise wie die in der WO 2015/055582 A2 beschriebenen Längenverstelleinrichtungen, wobei für nähere Details bezüglich der Ausgestaltungsmöglichkeiten sowie der Funktionsweise von für ein erfindungsgemäßes Pleuel geeigneten Längenverstelleinrichtungen auf das vorgenannte Dokument verwiesen wird.

In einer weiteren vorteilhaften Ausgestaltung eines erfindungsgemäßen Pleuels bildet bei einem erfindungsgemäßen Pleuel der Führungszylinder den Hydraulikzylinder der Längenverstelleinrichtung und der Führungsschaft den Kolben, wobei der Kolben der Längenverstelleinrichtung, insbesondere der Führungsschaft, den Hydraulikzylinder der Längenverstelleinrichtung in den ersten hydraulischen Arbeitsraum und den zweiten hydraulischen Arbeitsraum unterteilt.

In einer weiteren vorteilhaften Ausgestaltung eines erfindungsgemäßen Pleuels ist der Führungsschaft vorzugsweise als zweiseitig wirkender Kolben ausgebildet, insbesondere als zweiseitig wirkender Stufenkolben, und weist eine erste wirksame Hydraulikfläche und eine zweite wirksame Hydraulikdruckfläche auf, wobei die erste wirksame Hydraulikfläche dem ersten hydraulischen Arbeitsraum der Längenverstelleinrichtung zugeordnet ist und die zweite wirksame Hydraulikfläche des Stufenkolbens dem zweiten hydraulischen Arbeitsraum. Dabei ist die zweite wirksame Hydraulikfläche vorzugsweise insbesondere auf der vom freien Ende des Führungsschafts abgewandten Seite des Führungsschafts angeordnet. Insbesondere beträgt eine Größe der zweiten wirksamen Hydraulikfläche wenigstens das 0,3-fache, vorzugsweise wenigstens das 0,4-fache, insbesondere wenigstens das 0,5-fache, vorzugsweise wenigstens das 0,6-fache der ersten wirksamen Hydraulikfläche.

Während des Betriebs in einer Hubkolbenmaschine, insbesondere in einer Hubkolbenbrennkraftmaschine, entstehen während eines Arbeitshubs hohe, hydraulische Arbeitsdrücke in den beiden hydraulischen Arbeitsräumen der Längenverstelleinrichtung, welche hohe Anforderungen an die Abdichtung der hydraulischen Arbeitsräume der Längenverstelleinrichtung stellen. Je kleiner die zur Verfügung stehende hydraulische Arbeitsfläche ist, desto größer sind die infolge von Druck- und/oder Zugkräften entstehenden Drücke. Bereits kleine Leckagen, d.h. bereits ein Austritt kleiner Mengen an Hydraulikmedium, können zu einem Druckabbau im jeweiligen Arbeitsraum der hydraulischen Längenverstellvorrichtung und damit zu einem Ein- bzw. Ausfedern und/oder einer unerwünschten Längenverstellung des Pleuels führen. Diese Problematik kann sich insbesondere bei hohen Drehzahlen erhöhen.

Durch die aufgrund der Erfindung mögliche, geringere Dimensionierung des Führungsschaftes kann bei einem erfindungsgemäßen Pleuel eine größere hydraulische Arbeitsfläche am Kolben bereitgestellt werden, insbesondere auf der dem ersten Pleuelteil zugewandten Seite des Kolbens. Dadurch können die bei der Verwendung eines erfindungsgemäßen Pleuels in einer Hubkolbenmaschine in der hydraulischen Längenverstelleinrichtung am Kolben entstehenden hydraulischen Druckverhältnisse verbessert werden, insbesondere die entstehenden hydraulischen Drücke reduziert werden, was vorwiegend durch eine größere zweite wirksame Hydraulikfläche infolge eines im Durchmesser geringer dimensionierten Führungsschaftes erreicht werden kann. Insbesondere ermöglicht die Erfindung die Bereitstellung eines hydraulisch längenverstellbaren Pleuels, bei welchem die Größe der zweiten wirksamen Hydraulikfläche wenigstens das 0,3-fache, vorzugsweise das 0,4-fache, insbesondere wenigstens das 0,5-fache ermöglicht. Infolgedessen wiederum kann die Gefahr einer unerwünschten Veränderung der eingestellten, wirksamen Pleuellänge reduziert bzw. sogar ganz vermieden werden. Insbesondere kann eine unerwünschte Veränderung der eingestellten, wirksamen Pleuellänge infolge von Ein- und/oder Ausfedereffekten, die durch hohe, bei einem Verbrennungsvorgang im Brennraum eines Zylinders einer Hubkolbenbrennkraftmaschine entstehende Kräfte und infolgedessen entstehenden hohen Drücke verursacht werden, reduziert und/oder sogar ganz vermieden werden.

Bei einem erfindungsgemäßen Pleuel befindet sich der Hydraulikzylinder der Längenverstelleinrichtung vorzugsweise vollständig innerhalb des Pleuels, insbesondere innerhalb eines Pleuelschaftes, wobei als Pleuelschaft im Sinne der Erfindung ein stangenartiger Abschnitt zwischen dem kolbenseitigen Pleuelende und dem kurbelwellenseitigen Pleuelende verstanden wird.

Die für die Längenverstelleinrichtung erforderliche Hydraulikversorgung erfolgt vorzugsweise über eine Hydraulikmediumzuleitung, wobei die Hydraulikmediumzuleitung insbesondere über das kurbelwellenseitige Pleuellager mit Hydraulikmedium versorgt werden kann.

In einer weiteren vorteilhaften Ausgestaltung eines erfindungsgemäßen Pleuels ist die zweite Anschlagfläche eine sich vom Führungszylinder nach außen erstreckende Fläche, vorzugsweise eine sich vom Führungszylinder in radialer Richtung nach außen erstreckende Fläche, insbesondere eine umlaufend ausgebildete Fläche.

In einer weiteren vorteilhaften Ausgestaltung eines erfindungsgemäßen Pleuels ist die zweite Anschlagfläche zumindest teilweise durch eine, dem ersten Pleuelteil zugewandte Randfläche der Wandung des Führungszylinders gebildet. Die Randfläche erstreckt sich dabei vorzugsweise senkrecht zu einer Mantelfläche des Führungszylinders, insbesondere normal zur Längsachse des Pleuels. Dadurch lässt sich die zweite Anschlagfläche auf besonders einfache Art und Weise ausbilden. D.h. vorzugsweise bildet die Fläche eines dem ersten Pleuelteil zugewandten Randes des Führungszylinders zumindest teilweise die zweite Anschlagfläche.

In einer weiteren vorteilhaften Ausgestaltung eines erfindungsgemäßen Pleuels ist die erste Anschlagsfläche eine sich vom Führungsschaft nach außen erstreckende Fläche, vorzugsweise eine sich vom Führungsschaft in radialer Richtung nach außen erstreckende Fläche, insbesondere eine umlaufend ausgebildete Fläche. Die erste Anschlagfläche erstreckt sich vorzugsweise parallel zur zweiten Anschlagfläche, insbesondere normal zu einer Längsachse des Führungsschafts, besonders bevorzugt normal zur Längsachse des Pleuels.

In einer weiteren vorteilhaften Ausgestaltung eines erfindungsgemäßen Pleuels ist der erste Pleuelteil wenigstens zweiteilig ausgebildet, wobei der erste Pleuelteil vorzugsweise aus wenigstens einem ersten Abschnitt und dem Führungsschaft zusammengesetzt ist, und wobei der Führungsschaft im Bereich seines vom zweiten Pleuelteil abgewandten Endes insbesondere mit dem ersten Abschnitt verbunden ist. Insbesondere ist der Führungsschaft dabei vom ersten Abschnitt aufgenommen. Vorzugsweise ist dabei das wenigstens eine Element des Pleuellagers des ersten Pleuelteils, insbesondere das kleinere Pleuelauge, Teil des ersten Abschnitts des ersten Pleuelteils.

In einer weiteren vorteilhaften Ausgestaltung eines erfindungsgemäßen Pleuels ist der Führungsschaft im Bereich seines vom zweiten Pleuelteil abgewandten Endes mit dem ersten Abschnitt verschraubt. Vorzugsweise ist der Führungsschaft dabei in den ersten Abschnitt des ersten Pleuelteils eingeschraubt, insbesondere mit seinem vom zweiten Pleuelteil abgewandten Ende. Dadurch kann auf besonders einfache Art und Weise ein erster Pleuelteil mit einem Führungsschaft ausgebildet werden. Insbesondere lässt sich dadurch auf besonders einfache Art und Weise ein Führungsschaft mit geringen Toleranzen fertigen, da dieser unabhängig vom ersten Abschnitt des ersten Pleuelteils hergestellt werden kann.

In einer weiteren vorteilhaften Ausgestaltung eines erfindungsgemäßen Pleuels ist die erste Anschlagfläche des ersten Pleuelteils zumindest teilweise durch eine dem zweiten Pleuelteil zugewandte Randfläche der Wandung einer Bohrung des ersten Abschnitts des ersten Pleuelteils gebildet. Vorzugsweise weist die Bohrung im ersten Abschnitt des ersten Pleuelteils ein Innengewinde zur Aufnahme des Führungsschaftes auf, insbesondere ein Innengewinde zum Verschrauben des ersten Abschnitts mit dem Führungsschaft.

In einigen Fällen kann es vorteilhaft sein, wenn der zweite Pleuelteil mehrteilig ausgebildet ist, wobei es besonders vorteilhaft sein kann, wenn der Führungszylinder in einen Abschnitt des zweiten Pleuelteils eingeschraubt ist.

In dem ersten erfindungsgemäßen Pleuel ist eine wirksame Länge des Führungsschaftes relativ zu einer Tiefe des Führungszylinders derart bemessen, dass beim Verkürzen der wirksamen Pleuellänge zunächst ein dem zweiten Pleuelteil zugewandtes Ende des Führungsschaftes mit dem Führungszylinder auf Block geht, bevor die erste Anschlagfläche an der zweiten Anschlagfläche anliegt.

Als wirksame Länge des Führungsschaftes wird im Sinne der Erfindung der Abstand zwischen der ersten Anschlagfläche, insbesondere deren Flächenschwerpunkt, sowie einer zuerst mit dem Führungszylinder auf Block gehenden Fläche, insbesondere deren Flächenschwerpunkt, projiziert auf die Verschiebeachse des Führungsschaftes relativ zum Führungszylinder verstanden, d.h. parallel zur Verschiebeachse des Führungsschaftes gemessen, wobei die zuerst mit dem Führungszylinder auf Block gehende Fläche vorzugsweise ein unterstes Ende des Führungsschaftes bildet.

Als Tiefe des Führungszylinders im Sinne der Erfindung wird der Abstand zwischen der zweiten Anschlagfläche, insbesondere deren Flächenschwerpunkt, und einer zuerst mit dem Führungsschaft auf Block gehenden Fläche, insbesondere deren Flächenschwerpunkt, projiziert auf die Verschiebeachse des Führungszylinders relativ zum Führungsschaft, verstanden, wobei die zuerst mit dem Führungsschaft auf Block gehende Fläche vorzugsweise zumindest teilweise einen Boden des Führungszylinders bildet.

Das heißt mit anderen Worten, dass bei einer weiteren vorteilhaften Ausgestaltung eines erfindungsgemäßen Pleuels der Führungsschaft vorzugsweise geringfügig länger bemessen ist als der Führungszylinder tief ist, so dass beim Verkürzen der wirksamen Pleuellänge der Führungsschaft zunächst mit dem Führungszylinder auf Block geht, bevor die erste Anschlagfläche des ersten Pleuelteils an der zweiten Anschlagfläche des Führungszylinders anliegt und/oder mit dieser auf Block geht, wobei die zweite Anschlagfläche insbesondere durch einen oberen Rand des Führungszylinders gebildet ist.

In einer weiteren vorteilhaften Ausgestaltung eines erfindungsgemäßen Pleuels ist das Pleuel derart ausgestaltet, dass die erste Anschlagfläche mit der zweiten Anschlagfläche erst bei Erreichen einer definierten, entlang der Längsachse auf das Pleuel wirkenden Druckkraft auf Block geht.

Dazu sind vorzugsweise die wirksame Länge des Führungsschaftes relativ zur Tiefe des Führungszylinders sowie ein Durchmesser des Führungsschaftes derart bemessen und die Werkstoffeigenschaften des Führungsschaftes derart gewählt, dass nachdem der Führungsschaft mit dem Führungszylinder auf Block gegangen ist, eine zum in Kontakt bringen der ersten Anschlagfläche mit der zweiten Anschlagfläche erforderliche Deformation des Führungsschaftes erst, insbesondere im Wesentlichen, bei Erreichen der definierten Druckkraft erreicht wird. Dabei ist das Pleuel vorzugsweise derart ausgelegt, insbesondere ist die definierte Druckkraft derart gewählt, dass nachdem der Führungsschaft mit dem Führungszylinder auf Block gegangen ist, die erste Anschlagfläche mit der zweiten Anschlagfläche durch eine elastische Verformung des Führungsschaftes mit der zweiten Anschlagfläche in Kontakt gebracht werden kann. Insbesondere ab dem Erreichen der definierten Druckkraft, d.h. insbesondere bei Überschreiten der definierten Druckkraft, kann ein Anteil der auf das Pleuel entlang der Längsachse des Pleuels wirkenden Druckkraft am Führungsschaft vorbei über die erste Anschlagfläche und die zweite Anschlagfläche vom ersten Pleuelteil in den zweiten Pleuelteil übertragen werden kann und/oder umgekehrt.

Mit einer derartigen Ausgestaltung eines erfindungsgemäßen Pleuels können die auftretenden Druckkräfte vorteilhaft auf mehrere Bauteile des Pleuels verteilt werden, insbesondere je nach Bedarf. Durch die nur teilweise Entlastung des Führungsschaftes ist die Zusatzbelastung der übrigen Bauteile geringer.

In dem erfindungsgemäßen, alternativen Pleuel ist dazu die wirksame Länge des Führungsschaftes kleiner bemessen als die Tiefe des Führungszylinders, so dass bevor das dem zweiten Pleuelteil zugewandte Ende des Führungsschaftes mit dem Führungszylinder beim Verkürzen der wirksamen Pleuellänge auf Block geht, die erste Anschlagfläche an der zweiten Anschlagfläche anliegt oder zum Anliegen kommt. Das heißt mit anderen Worten, in diesem Fall ist die wirksame Länge des Führungsschaftes vorzugsweise geringer bemessen als die Tiefe des Führungszylinders, so dass grundsätzlich eine Blockbildung zwischen dem Führungsschaft und dem Führungszylinder vermieden wird und beim Verkürzen der wirksamen Pleuellänge insbesondere stets die erste Anschlagfläche an der zweiten Anschlagfläche anstößt, bevor das dem zweiten Pleuelteil zugewandte Ende des Führungsschaftes den Boden des Führungszylinders erreicht (welchen es bei dieser konkret beschriebenen Ausgestaltung insbesondere nie erreicht). Auf diese Art und Weise können die auf den Führungsschaft wirkenden Druckkräfte besonders klein gehalten werden. Dies ermöglicht eine besonders geringe Dimensionierung des Führungsschaftes, insbesondere hinsichtlich seines Querschnitts.

In einer vorteilhaften Ausgestaltung des erfindungsgemäßen alternativen Pleuels wird beim Anliegen der ersten Anschlagfläche an der zweiten Anschlagfläche eine auf das Pleuel aufgebrachte Druckkraft vollständig am Führungsschaft vorbei über die erste Anschlagfläche und die zweite Anschlagfläche vom ersten Pleuelteil in den zweiten Pleuelteil übertragen und/oder umgekehrt.

Sind der Führungsschaft und/oder der Führungszylinder jeweils eingeschraubt, lässt sich auf besonders einfache Art und Weise die wirksame Länge des Führungsschaftes und/oder die minimale und/oder maximale wirksame Pleuellänge einstellen, insbesondere wenn der Führungsschaft und/oder der Führungszylinder rotationssymmetrisch ausgebildet sind, nämlich durch bloßes mehr oder weniger Einschrauben in den Abschnitt des zugehörigen Pleuelteils. Eine erfindungsgemäße Hubkolbenmaschine ist dadurch gekennzeichnet, dass sie ein erfindungsgemäß ausgebildetes Pleuel aufweist.

Ein erfindungsgemäßes Fahrzeug mit einer Hubkolbenmaschine ist dadurch gekennzeichnet, dass es eine erfindungsgemäße Hubkolbenmaschine aufweist.

Diese und weitere Merkmale gehen außer aus den Ansprüchen und aus der Beschreibung auch aus den Figuren hervor, wobei die einzelnen Merkmale jeweils für sich allein oder zu mehreren, in Form von Unterkombinationen bei einer Ausgestaltung der Erfindung verwirklicht sein können, sofern sie technisch sinnvoll ist.

Die Erfindung wird im Folgenden anhand von nicht einschränkenden Ausführungsbeispielen, die in den Figuren dargestellt sind, näher erläutert, wobei bei Bauteile mit gleicher Funktion die gleichen Bezugszeichen aufweisen. In den Figuren zeigen wenigstens teilweise schematisch:
- Fig. 1a: ein erstes Ausführungsbeispiel eines erfindungsgemäßen Pleuels in perspektivischer Darstellung,
- Fig. 1b: das erfindungsgemäße Pleuel aus Fig. 1a in Schnittdarstellung,
- Fig.2: einen vergrößerten Ausschnitt des erfindungsgemäßen Pleuels aus den Fig. 1a und 1b, ebenfalls in Schnittdarstellung,
- Fig. 3a: einen Ausschnitt eines zweiten Ausführungsbeispiels eines erfindungsgemäßen Pleuels in einem ersten Zustand, ebenfalls in Schnittdarstellung, und
- Fig. 3b: den Ausschnitt des Pleuels aus Fig. 3a in einem zweiten Zustand.

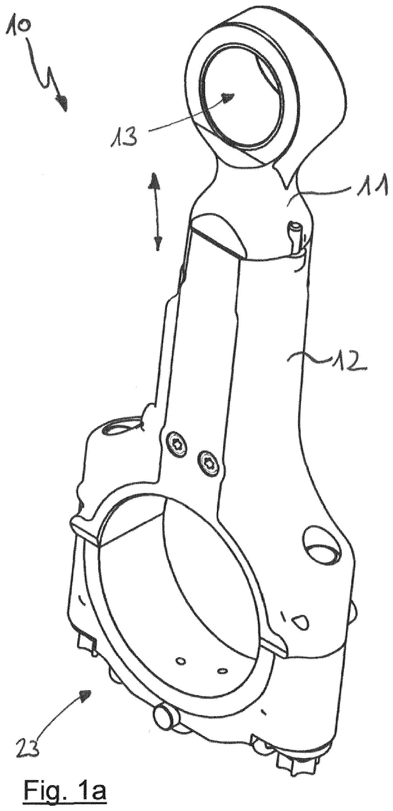

Fig. 1a zeigt ein erstes Ausführungsbeispiel eines erfindungsgemäßen, längenverstellbaren Pleuels 10 mit einem ersten Pleuelteil 11 sowie einem zweiten Pleuelteil 12, wobei der erste Pleuelteil 11 an einem ersten, kolbenseitigen Ende ein kleines Pleuelauge 13 zur Verbindung des Pleuels 10 mit einem Hubkolben einer Hubkolbenbrennkraftmaschine aufweist. Am anderen, kurbelwellenseitigen Ende des Pleuels 10 weist das Pleuel 10 ein größeres Pleuelauge 23 zur Anbindung des Pleuels 10 an einer Kurbelwelle der Hubkolbenmaschine auf.

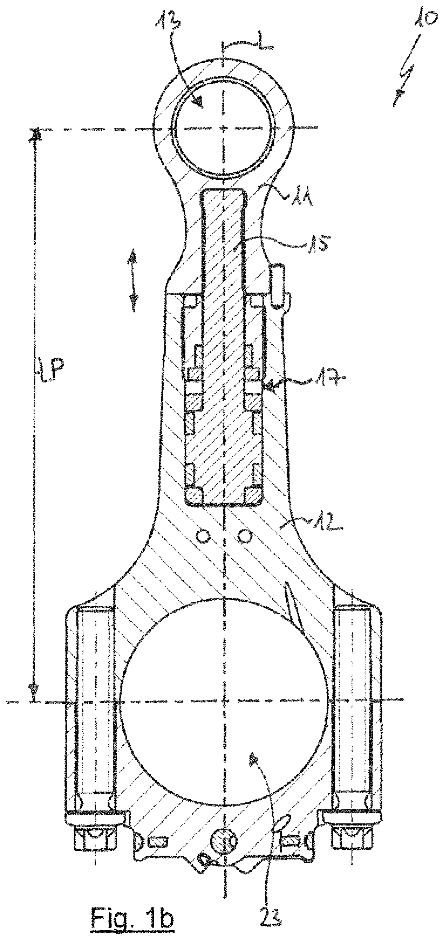

Wie anhand von Fig. 1b erkennbar ist, weist der zweite Pleuelteil 12 an seinem dem ersten Pleuelteil 11 zugewandten Ende einen Abschnitt mit einem Führungszylinder 17 auf. Der erste Pleuelteil 11 weist an seinem dem zweiten Pleuelteil 12 zugewandten Ende einen korrespondierend zum Führungszylinder 17 ausgebildeten Führungsschaft 15 auf.

Der Führungsschaft 15 ist dabei zumindest teilweise vom Führungszylinder 17 aufgenommen und kann zum Verstellen einer wirksamen Pleuellänge LP relativ zum Führungszylinder 17 entlang einer Längsachse L des Pleuels 10 relativ zum Führungszylinder 17 bzw. dem zweiten Pleuelteil 12 verschoben werden, was in Fig. 1b durch den nicht näher bezeichneten Doppelpfeil angedeutet ist. Insbesondere kann der Führungsschaft 15 in den Führungszylinder 17 hineingeschoben bzw. aus diesem herausgezogen werden. Ein Ineinanderschieben von Führungsschaft 15 und Führungszylinder 17 bewirkt dabei eine Verkürzung einer wirksamen Pleuellänge LP, während ein Auseinanderziehen bzw. ein Herausziehen des Führungsschaftes 15 aus dem Führungszylinder 17 zu einer Verlängerung der wirksamen Pleuellänge LP führt.

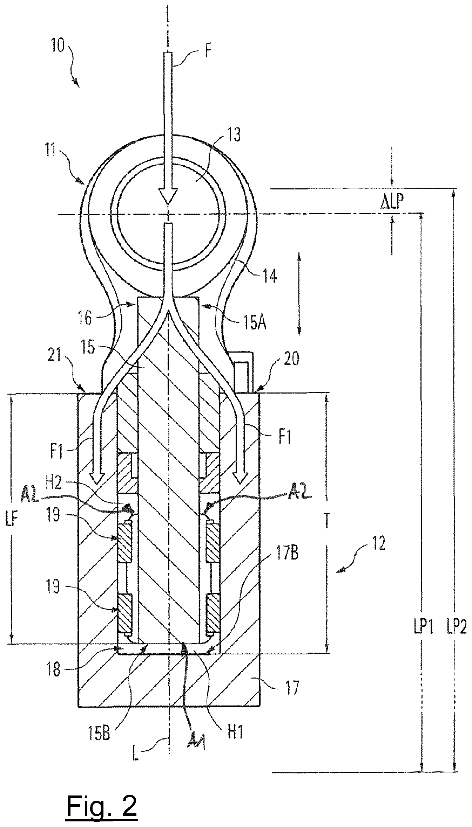

Die wirksame Pleuellänge LP kann dabei zwischen einer minimalen wirksamen Pleuellänge LP1 sowie einer maximalen wirksamen Pleuellänge LP2, welche sich um einen Betrag ΔLP unterscheiden (siehe z.B. Fig. 2), eingestellt werden. Die wirksame Pleuellänge LP ist dabei durch den Abstand zwischen den beiden Drehachsen des Pleuels 10 definiert, um welche sich das Pleuel 10 in einem funktionsgemäßen Verwendungszustand kolbenseitig und kurbelwellenseitig drehen kann.

Fig. 2 zeigt einen vergrößerten Ausschnitt des erfindungsgemäßen Pleuels 10 aus den Fig. 1a und 1b, anhand derer insbesondere gut zu erkennen ist, wie der Führungsschaft 15 des ersten Pleuelteils 11 vom Führungszylinder 17 des zweiten Pleuelteils 12 aufgenommen ist.

Bei diesem Ausführungsbeispiel eines erfindungsgemäßen Pleuels 10 ist der erste Pleuelteil 11 mehrteilig ausgebildet und insbesondere aus einem ersten Abschnitt 14, welcher das kleinere Pleuelauge 13 umfasst, sowie dem Führungsschaft 15 zusammengesetzt, wobei der erste Abschnitt 14 des ersten Pleuelteils 11 eine Bohrung 16 mit einem hier nicht näher bezeichneten Innengewinde aufweist, in welche der Führungsschaft 15 mit einem ersten Ende 15A eingeschraubt ist, wobei der Führungsschaft 15 dazu in diesem Bereich 15A ein entsprechend ausgebildetes, nicht näher bezeichnetes Außengewinde aufweist. In einer alternativen Ausgestaltung eines erfindungsgemäßen Pleuels kann der Führungsschaft 15 mittels eines Querschrumpfsitzes, d.h. mittels einer Presspassung, mit dem ersten Pleuelteil 11 verbunden sein, wobei der Führungsschaft 15 und/oder der erste Abschnitt 14 des ersten Pleuelteils 11, insbesondere die Bohrung 16 im ersten Pleuelteil 11, dazu insbesondere ein entsprechendes Übermaß aufweisen.

Zum Verstellen der wirksamen Pleuellänge weist das erfindungsgemäße Pleuel 10 eine nicht näher bezeichnete hydraulische Längenverstelleinrichtung auf, welche einen Hydraulikzylinder und einen Kolben umfasst, die zum Verstellen der wirksamen Pleuellänge relativ zueinander entlang einer Verschiebeachse bewegt werden können, wobei bei diesem Ausführungsbeispiel eines erfindungsgemäßen Pleuels 10 die Verschiebeachse mit der Längsachse L des Pleuels zusammenfällt und der Führungszylinder 17 den Hydraulikzylinder der Längenverstelleinrichtung bildet und der Führungsschaft 15 den Kolben der Längenverstelleinrichtung. Die Längenverstelleinrichtung funktioniert dabei nach dem gleichen Prinzip, wie in der vorstehend bereits mehrfach erwähnten WO 2015/055582 A2 beschrieben.

Dabei bildet der Führungszylinder 17 den Hydraulikzylinder 17 der Längenverstelleinrichtung und der Führungsschaft 15 den Kolben 15, wobei der Führungsschaft 15 als doppelseitig bzw. zweistufig wirkender Stufenkolben 15 ausgebildet ist und einen hydraulischen Arbeitsraum im Führungszylinder 17 in einen ersten, in diesem Fall unteren, Hydraulikraum H1 sowie in einen zweiten, in diesem Fall oberen, Hydraulikraum H2 teilt, wobei zur Abdichtung der beiden Hydraulikräume H1 und H2 gegeneinander und gegenüber dem Führungszylinder 17 am Führungsschaft 15 entsprechende Dichtungen 19 vorgesehen sind.

Der als zweiseitig wirkender Stufenkolben ausgebildete Führungsschaft 15 weist eine erste wirksame Hydraulikfläche A1 und eine zweite wirksame Hydraulikdruckfläche A2 auf, wobei die erste wirksame Hydraulikfläche A1 dem ersten hydraulischen Arbeitsraum H1 der Längenverstelleinrichtung zugeordnet ist und die zweite wirksame Hydraulikfläche A2 dem zweiten hydraulischen Arbeitsraum H2 und insbesondere auf der vom freien Ende des Führungsschafts 15 abgewandten Seite des Führungsschafts 15 angeordnet ist. Dabei beträgt eine Größe der zweiten wirksamen Hydraulikfläche A2 das 0,5-fache der ersten wirksamen Hydraulikfläche A1.

Erfindungsgemäß weist der erste Pleuelteil 11 eine Anschlagfläche 20 auf und der zweite Pleuelteil 12 eine zweite Anschlagfläche 21, wobei ein Anliegen der ersten Anschlagfläche 20 an der zweiten Anschlagfläche 21 ein Ineinanderschieben von erstem Pleuelteil 11 und zweitem Pleuelteil 12 bzw. von Führungsschaft 15 und Führungszylinder 17 und somit eine (weitere) Verkürzung der wirksamen Pleuellänge begrenzt, wobei dieses Ausführungsbeispiel eines erfindungsgemäßen Pleuels 10 derart ausgestaltet ist, dass die erste Anschlagfläche 20 an der zweiten Anschlagfläche 21 anliegt bzw. aufliegt, wenn die minimale wirksame Pleuellänge LP1 erreicht ist.

Erfindungsgemäß ist wird bei diesem Pleuel 10 beim Anliegen der ersten Anschlagfläche 20 an der zweiten Anschlagfläche 21 eine auf das Pleuel 10 entlang der Längsachse L des Pleuels 10 wirkende Druckkraft F, welche hier durch den mit "F" bezeichneten Pfeil symbolisch dargestellt ist, vollständig am Führungsschaft 15 vorbei über die erste Anschlagfläche 20 und die zweite Anschlagfläche 21 vom ersten Pleuelteil 11 in den zweiten Pleuelteil 12 übertragen bzw. umgekehrt.

Dazu ist eine Länge LF des Führungsschaftes 15 gegenüber einer Tiefe T des Führungszylinders 17 derart bemessen, dass bevor beim Verkürzen der wirksamen Pleuellänge LP (durch Ineinanderschieben von Führungsschaft 15 und Führungszylinder 17) das dem zweiten Pleuelteil 12 zugewandte Ende des Führungsschaftes 15B einen Boden 17B des Führungszylinders 17 erreicht, die erste Anschlagfläche 20 an der zweiten Anschlagfläche 21 anliegt.

Insbesondere ist das Pleuel 10 derart ausgebildet, dass zwischen dem Führungsschaft 15, insbesondere dessen unterem Ende 15B und dem Boden 17B des Führungszylinders 17 stets ein kleiner Spalt 18 verbleibt, so dass eine auf das Pleuel 10 aufgebrachte Druckkraft F nach Erreichen der minimalen, wirksamen Pleuellänge LP1 stets vollständig über die erste Anschlagfläche 20 und die zweite Anschlagfläche 21 am Führungsschaft 15 vorbei vom ersten Pleuelteil 11 in den zweiten Pleuelteil 12 übertragen werden kann und/oder umgekehrt, was in Fig. 2 durch die mit F1 bezeichneten Pfeile symbolisiert ist. D.h. vorzugsweise ist ein gemäß des ersten Ausführungsbeispiels 10 ausgebildetes erfindungsgemäßes Pleuel derart ausgebildet, dass auch bei einer möglicherweise, aufgrund einer äußert hohen Druckkraft F entstehenden, elastischen Verformung des Führungszylinders 17, das untere Ende 15B des Führungsschaftes 15 nicht mit dem Boden 17B des Führungszylinders 17 auf Block geht und/oder an diesen anstößt. Dies ist allerdings nicht zwingend erforderlich. Wichtig ist lediglich, dass der Führungsschaft 15 ausreichend entlastet wird.

Da die auf das Pleuel 10 wirkende Druckkraft F, welche durch den Verbrennungsdruck im zugehörigen Brennraum der Hubkolbenmaschine entsteht, bei eingestellter minimaler wirksamer Pleuellänge LP1 im Abwärtshub am größten ist und bei dem erfindungsgemäßen Pleuel 10 bei eingestellter, minimaler wirksamer Pleuellänge LP1 über den Führungszylinder 17 abgeführt wird und nicht über den Führungsschaft 15, kann eine maximale, auf den Führungsschaft 15 während des Betriebs der Hubkolbenmaschine wirkende Druckkraftbelastung, insbesondere eine während des Betriebs der Hubkolbenmaschine auf den Führungsschaft 15 maximal wirkende Druckkraft F, reduziert werden.

Infolgedessen kann der Führungsschaft 15 selbst geringer dimensioniert werden, wobei die aufgrund der Erfindung mögliche Entlastung des Führungsschaftes 15 insbesondere eine Reduzierung des Querschnitts des Führungsschafts 15 ermöglicht. Dadurch kann eine größere hydraulische Arbeitsfläche vor allem im oberen Hydraulikraum H2 am durch den Führungsschaft 15 gebildeten Kolben 15 bereitgestellt werden, insbesondere auf der dem ersten Pleuelteil 11 zugewandten Seite des Kolbens 15. Insbesondere kann eine zweite wirksame Hydraulikfläche A2 bereitgestellt werden, deren Größe wenigstens das 0,3-fache der ersten wirksamen Hydraulikfläche beträgt, vorzugsweise wenigstens das 0,4-fache oder wie in diesem Ausführungsbeispiel das 0,5-fache oder darüber. Dadurch können die im Betrieb in der hydraulischen Längenverstelleinrichtung am Kolben 15 entstehenden hydraulischen Druckverhältnisse verbessert werden. Infolgedessen wiederum kann die Gefahr einer unerwünschten Veränderung der eingestellten, wirksamen Pleuellänge LP, insbesondere ein unerwünschtes Ausfedern, reduziert bzw. sogar ganz vermieden werden.

Der geringeren Dimensionierung des Führungsschaftes 15 sind, insbesondere in Bezug auf Knicken und Betriebsfestigkeit (HCF = high cycle fatigue), allerdings Grenzen gesetzt, welche insbesondere durch die bei größeren, wirksamen Pleuellängen LP auftretenden Druckbelastungen definiert sind. Die bei größeren, wirksamen Pleuellängen LP auftretenden Druckbelastungen sind zwar insgesamt geringer als bei minimaler, wirksamer Pleuellänge LP1 im Abwärtshub. Bei größeren, wirksamen Pleuellängen LP liegt die erste Anschlagfläche 20 jedoch nicht auf der zweiten Anschlagfläche 21 auf, so dass eine auf das Pleuel 10 wirkende Druckkraft F nicht über den Führungszylinder 15 abgeführt werden kann, sondern vollständig über den Führungsschaft 15 und das Hydraulikmedium im unteren Hydraulikraum H1 abgestützt wird. D.h. in diesen Fällen wird keine Entlastung des Führungsschaftes 15 erreicht.

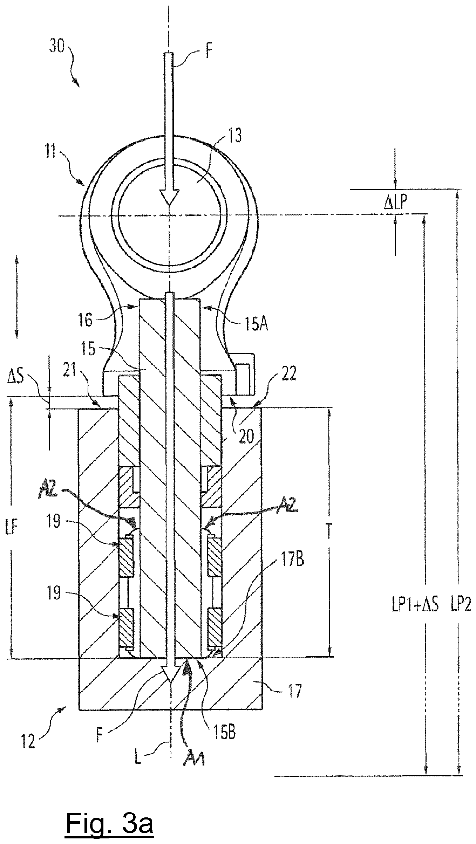

Fig. 3a zeigt einen Ausschnitt eines zweiten Ausführungsbeispiels eines erfindungsgemäßen Pleuels 30, wobei das Pleuel 30 prinzipiell genauso aufgebaut ist wie das anhand der Fig. 1a bis 2 beschriebene, erfindungsgemäße Pleuel 10. Funktionsgleiche Bauteile sind entsprechend mit gleichen Bezugszeichen versehen. Bei dem in Fig. 3a dargestellten erfindungsgemäßen Pleuel 30 ist die Länge LF des Führungsschafts 15 gegenüber der Tiefe T des Führungszylinders 17 jedoch anders relativ zu diesem bemessen.

Bei dem in Fig. 3a dargestellten Ausführungsbeispiel eines erfindungsgemäßen Pleuels 30 ist die Länge LF des Führungsschaftes 15 dabei um einen Toleranzbetrag ΔS größer gewählt als die Tiefe T des Führungszylinders 17.

Beim Verkürzen der wirksamen Pleuellänge LP durch Ineinanderschieben von Führungsschaft 15 und Führungszylinder 17, geht das untere Ende 15B des Führungsschaftes 15 somit zunächst mit dem Boden 17B des Führungszylinders 17 auf Block, d.h. stößt an diesen an, bevor die erste Anschlagfläche 20 an der zweiten Anschlagfläche 21 aufliegt. In diesem Zustand wird eine gesamte auf das Pleuel 30 aufgebrachte Druckkraft F vom ersten Pleuelteil 11 über den Führungsschaft 15, insbesondere in den Boden 17B des Führungszylinders 17, übertragen.

Liegt das untere Ende 15B des Führungsschaftes 15 am Boden 17B des Führungszylinders 17 an, führt das Aufbringen einer ausreichend großen Druckkraft F zu einer elastischen Deformation des Führungsschaftes 15, insbesondere zu einem Zusammendrücken des Führungsschaftes 15 entlang der Längsachse L des Pleuels 30 und dadurch zu einer elastischen Verkürzung des Führungsschaftes 15 (Länge verkürzt = LF minus elastische Deformation infolge Druckkraft). Infolgedessen kommt es zu einer weiteren, elastisch bedingten Verkürzung der wirksamen Pleuellänge LP, wobei beim elastisch bedingten Verkürzen der wirksamen Pleuellänge LP immer ein Spalt 22 verbleibt zwischen den Anschlagflächen 20 und 21, so dass die gesamte Druckkraft F weiterhin über den Führungsschaft 15 geleitet wird.

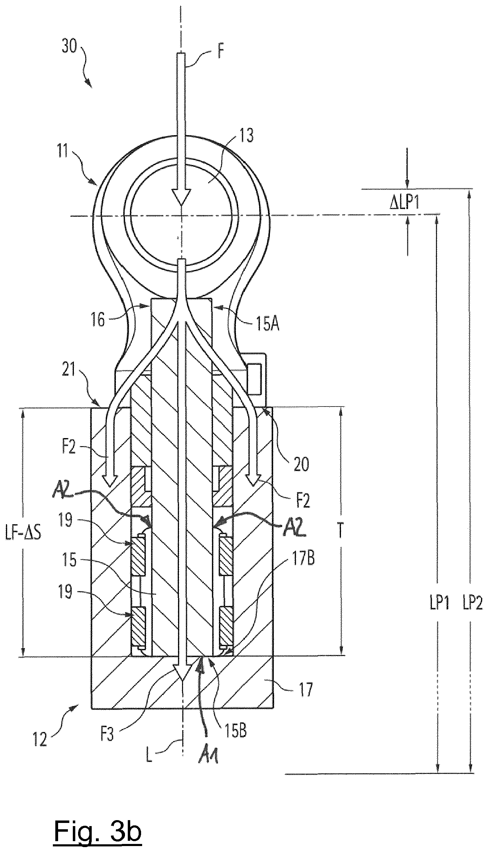

Das erfindungsgemäße Pleuel 30 ist dabei derart ausgelegt, insbesondere der Führungsschaft 15, dass nachdem der Führungsschaft 15 mit dem Führungszylinder 17 auf Block gegangen ist, bei Erreichen einer definierten, entlang der Längsachse auf das Pleuel 30 wirkenden Druckkraft F die erste Anschlagfläche 20 mit der zweiten Anschlagfläche 21 in Kontakt kommt und/oder auf Block geht, was insbesondere durch eine Deformation des Führungsschaftes 15, verursacht durch die aufgebrachte Drucckraft F um den Betrag ΔS entlang der Längsachse L erreicht wird. Dieser Zustand ist in Fig. 3b dargestellt.

Durch eine entsprechende Ausgestaltung des Führungsschaftes 15, insbesondere durch eine entsprechend bemessene Länge LF sowie einen entsprechend bemessenen Querschnitt und einen entsprechend gewählten Werkstoff, kann die durch Aufbringen der definierten Druckkraft F bewirkte Verformung derart eingestellt werden, dass sich eine Verkürzung des Führungsschaftes um den Betrag ΔS ergibt, insbesondere aufgrund einer rein elastischen Verformung, vgl. Fig. 3a mit Fig. 3b.

In dem Moment, in dem eine auf das Pleuel 30 aufgebrachte Druckkraft F die definierte Druckkraft erreicht und die erste Anschlagfläche 20 an der zweiten Anschlagfläche 21 anstößt, wird erfindungsgemäß eine auf das Pleuel 30 aufgebrachte Druckkraft F zumindest teilweise, d.h. zumindest ein Anteil einer auf das Pleuel entlang der Längsachse des Pleuels 30 wirkenden Druckkraft F, am Führungsschaft 15 vorbei über die erste Anschlagfläche 20 und die zweite Anschlagfläche 21 vom ersten Pleuelteil 11 in den zweiten Pleuelteil 12 übertragen, siehe Fig. 3b.

Der über die Anschlagflächen 20 und 21 übertragene Anteil der Druckkraft F ist in Fig. 3b dabei symbolisch durch die mit F2 bezeichneten Pfeile dargestellt und der über den Führungsschaft 15 vom ersten Pleuelteil 11 in den zweiten Pleuelteil 12 übertragene, restliche Anteil der Druckkraft F ist durch den mit F3 bezeichneten Pfeil symbolisiert.

Dadurch, dass der Führungsschaft 15 in den Abschnitt 14 des ersten Pleuelteils 11 eingeschraubt ist und rotationssymmetrisch ausgebildet ist, lässt sich auf besonders einfache Art und Weise die wirksame Länge LF des Führungsschaftes 15 einstellen und an den Führungszylinder 17 anpassen und die definierte Druckkraft F einstellen bzw. die zum auf Block gehen der Anschlagflächen 20 und 21 erforderliche Deformation ΔS des Führungsschaftes einstellen.

Bei entsprechender Ausgestaltung eines erfindungsgemäßen Pleuels, insbesondere bei einer entsprechend großen Bandbreite einer zulässigen Einschraubtiefe des Führungsschaftes, kann auf diese Weise je nach Bedarf wahlweise ein erfindungsgemäßes Pleuel mit den Eigenschaften des anhand von Fig. 1 beschriebenen Pleuels 10 bereitgestellt werden oder ein Pleuel mit den Eigenschaften des anhand von Fig. 2a und 2b beschriebenen Pleuels 30.

Selbstverständlich ist eine Vielzahl von Abwandlungen, insbesondere von konstruktiven Abwandlungen, möglich, ohne den Inhalt der Patentansprüche zu verlassen.

### Bezuqszeichenliste:

- 10, 30: erfindungsgemäßes, längenverstellbares Pleuel
- 11: erster Pleuelteil
- 12: zweiter Pleuelteil
- 13: kleines Pleuelauge
- 14: erster Abschnitt des ersten Pleuelteils
- 15: Führungsschaft
- 15A: erstes Ende des Führungsschaftes
- 15B: zweites Ende des Führungsschaftes
- 16: Bohrung
- 17: Führungszylinder
- 17B: Boden des Führungszylinders
- 18: Spalt
- 19: Dichtungen
- 20: erste Anschlagfläche
- 21: zweite Anschlagfläche
- 22: Spalt zwischen erster und zweiter Anschlagfläche bei Anschlag des Führungsschafts am Führungszylinder
- 23: großes Pleuelauge
- A1: erste wirksame Hydraulikfläche
- A2: zweite wirksame Hydraulikfläche
- F: Druckkraft
- F1, F2, F3: Druckkraftanteil
- H1: erster Hydraulikraum
- H2: zweiter Hydraulikraum
- L: Längsachse des Pleuels
- LF: wirksame Länge des Führungsschafts
- PL: wirksame Pleuellänge
- LP1: minimale wirksame Pleuellänge
- LP2: maximale wirksame Pleuellänge
- ΔS: Spalthöhe des Spalts zwischen erster und zweiter Anschlagfläche bei Anschlag des Führungsschafts am Führungszylinder
- T: Tiefe des Führungszylinders

## Patentansprüche

1. Längenverstellbares Pleuel (10, 30) für eine Hubkolbenmaschine, insbesondere für eine Hubkolbenbrennkraftmaschine, wobei das Pleuel (10, 30) zumindest einen ersten Pleuelteil (11) und einen zweiten Pleuelteil (12) aufweist, wobei der zweite Pleuelteil (12) an seinem dem ersten Pleuelteil (11) zugewandten Ende einen Abschnitt mit einem Führungszylinder (17) aufweist, wobei der erste Pleuelteil (11) an seinem dem zweiten Pleuelteil (12) zugewandten Ende einen korrespondierend zum Führungszylinder (17) ausgebildeten Führungsschaft (15) aufweist, wobei der Führungsschaft (15) des ersten Pleuelteils (11) in einem funktionsgemäßen Verwendungszustand des Pleuels (10, 30) zumindest teilweise vom Führungszylinder (17) aufgenommen ist und zum Verstellen einer wirksamen Pleuellänge relativ zu diesem bewegbar ist, insbesondere entlang einer Längsachse (L) des Pleuels (10, 30), wobei der erste Pleuelteil (11) eine erste Anschlagfläche (20) aufweist und der zweite Pleuelteil (12) eine zweite Anschlagfläche (21), und wobei ein Anliegen der ersten Anschlagfläche (20) an der zweiten Anschlagfläche (21) eine Relativbewegung zwischen dem ersten Pleuelteil (11) und dem zweiten Pleuelteil (12) in eine erste Richtung begrenzt,
wobei das Pleuel (10, 30) derart ausgestaltet ist, dass beim Anliegen der ersten Anschlagfläche (20) an der zweiten Anschlagfläche (21) zumindest ein Anteil einer auf das Pleuel (10, 30) entlang der Längsachse des Pleuels (L) wirkenden Druckkraft (F) am Führungsschaft (15) vorbei über die erste Anschlagfläche (20) und die zweite Anschlagfläche (21) vom ersten Pleuelteil (11) in den zweiten Pleuelteil (12) übertragen wird und/oder umgekehrt,
**dadurch gekennzeichnet, dass**
eine wirksame Länge (LF) des Führungsschaftes (15) relativ zu einer Tiefe (T) des Führungszylinders (17) derart bemessen ist, dass beim Verkürzen der wirksamen Pleuellänge (PL) zunächst ein dem zweiten Pleuelteil (12) zugewandtes Ende des Führungsschaftes (15) mit dem Führungszylinder (17) auf Block geht und danach die erste Anschlagfläche (20) mit der zweiten Anschlagfläche (21) auf Block geht.

2. Pleuel (30) nach Anspruch 1, **dadurch gekennzeichnet, dass** das Pleuel (30) derart ausgestaltet ist, dass die erste Anschlagfläche (20) mit der zweiten Anschlagfläche (21) erst bei Erreichen einer definierten, entlang der Längsachse (L) auf das Pleuel (30) wirkenden Druckkraft (F) auf Block geht.

3. Längenverstellbares Pleuel (10, 30) für eine Hubkolbenmaschine, insbesondere für eine Hubkolbenbrennkraftmaschine, wobei das Pleuel (10, 30) zumindest einen ersten Pleuelteil (11) und einen zweiten Pleuelteil (12) aufweist, wobei der zweite Pleuelteil (12) an seinem dem ersten Pleuelteil (11) zugewandten Ende einen Abschnitt mit einem Führungszylinder (17) aufweist, wobei der erste Pleuelteil (11) an seinem dem zweiten Pleuelteil (12) zugewandten Ende einen korrespondierend zum Führungszylinder (17) ausgebildeten Führungsschaft (15) aufweist, wobei der Führungsschaft (15) des ersten Pleuelteils (11) in einem funktionsgemäßen Verwendungszustand des Pleuels (10, 30) zumindest teilweise vom Führungszylinder (17) aufgenommen ist und zum Verstellen einer wirksamen Pleuellänge relativ zu diesem bewegbar ist, insbesondere entlang einer Längsachse (L) des Pleuels (10, 30), wobei der erste Pleuelteil (11) eine erste Anschlagfläche (20) aufweist und der zweite Pleuelteil (12) eine zweite Anschlagfläche (21), und wobei ein Anliegen der ersten Anschlagfläche (20) an der zweiten Anschlagfläche (21) eine Relativbewegung zwischen dem ersten Pleuelteil (11) und dem zweiten Pleuelteil (12) in eine erste Richtung begrenzt,
wobei das Pleuel (10, 30) derart ausgestaltet ist, dass beim Anliegen der ersten Anschlagfläche (20) an der zweiten Anschlagfläche (21) zumindest ein Anteil einer auf das Pleuel (10, 30) entlang der Längsachse des Pleuels (L) wirkenden Drucckraft (F) am Führungsschaft (15) vorbei über die erste Anschlagfläche (20) und die zweite Anschlagfläche (21) vom ersten Pleuelteil (11) in den zweiten Pleuelteil (12) übertragen wird und/oder umgekehrt,
**dadurch gekennzeichnet, dass**
die wirksame Länge (LF) des Führungsschaftes (15) kleiner bemessen ist, als die Tiefe (T) des Führungszylinders (17), so dass bevor beim Verkürzen der wirksamen Pleuellänge (PL) das dem zweiten Pleuelteil (12) zugewandte Ende des Führungsschaftes (15) den Boden des Führungszylinders (17) erreicht, die erste Anschlagfläche (20) an der zweiten Anschlagfläche (21) anliegt.

4. Pleuel (10, 30) nach einem der vorhergehenden Ansprüche, **dadurch gekennzeichnet, dass** das Pleuel (10, 30) derart ausgestaltet ist, dass ein Anliegen der ersten Anschlagfläche (20) an der zweiten Anschlagfläche (21) eine eine Verkürzung der wirksamen Pleuellänge bewirkende Relativbewegung zwischen dem ersten Pleuelteil (11) und dem zweiten Pleuelteil (12) begrenzt.

5. Pleuel (10, 30) nach einem der vorhergehenden Ansprüche, **dadurch gekennzeichnet, dass** der erste Pleuelteil (11) und/oder der zweite Pleuelteil (12) wenigstens ein Element eines Pleuellagers (13, 14) aufweist, vorzugsweise ein Pleuelauge (13, 14), wobei der erste Pleuelteil (11) dazu eingerichtet ist, mit einem Hubkolben einer Hubkolbenbrennkraftmaschine verbunden zu werden, und wobei der zweite Pleuelteil (12) dazu eingerichtet ist, mit einer Kurbelwelle der Hubkolbenbrennkraftmaschine verbunden zu werden.

6. Pleuel (10, 30) nach einem der vorhergehenden Ansprüche, **dadurch gekennzeichnet, dass** das Pleuel (10, 30) eine hydraulische Längenverstelleinrichtung zum Verstellen der wirksamen Pleuellänge aufweist, wobei die Längenverstelleinrichtung wenigstens einen Hydraulikzylinder (17) mit einem ersten hydraulischen Arbeitsraum (H1) und mit einem zweiten hydraulischen Arbeitsraum (H2) sowie mit einem Kolben (15) aufweist, wobei der Kolben (15) der Längenverstelleinrichtung Teil des ersten Pleuelteils (11) ist und der Hydraulikzylinder (17) Teil des zweiten Pleuelteils (12).

7. Pleuel (10, 30) nach Anspruch 6, **dadurch gekennzeichnet, dass** der Führungszylinder (17) den Hydraulikzylinder (17) der hydraulischen Längenverstelleinrichtung bildet und der Führungsschaft (15) den Kolben (15) der Längenverstelleinrichtung, wobei der Kolben (15) der Längenverstelleinrichtung, insbesondere der Führungsschaft (15), den Hydraulikzylinder (17) der Längenverstelleinrichtung in den ersten hydraulischen Arbeitsraum (H1) und den zweiten hydraulischen Arbeitsraum (H2) unterteilt.

8. Pleuel (10, 30) nach Anspruch 7, **dadurch gekennzeichnet, dass** der Führungsschaft (15) als zweiseitig wirkender Kolben (15) ausgebildet ist, insbesondere als zweiseitig wirkender Stufenkolben (15), und eine erste wirksame Hydraulikfläche (A1) und eine zweite wirksame Hydraulikdruckfläche (A2) aufweist, wobei die erste wirksame Hydraulikfläche (A1) dem ersten hydraulischen Arbeitsraum (H1) der Längenverstelleinrichtung zugeordnet ist und die zweite wirksame Hydraulikfläche (A2) des Stufenkolbens (15) dem zweiten hydraulischen Arbeitsraum (H2), und wobei eine Größe der zweiten wirksamen Hydraulikfläche (A2) wenigstens das 0,3-fache, vorzugsweise wenigstens das 0,4-fache, insbesondere wenigstens das 0,5-fache, vorzugsweise wenigstens das 0,6-fache, der ersten wirksamen Hydraulikfläche (A1) beträgt.

9. Pleuel (10, 30) nach einem der vorhergehenden Ansprüche, **dadurch gekennzeichnet, dass** die zweite Anschlagfläche (21) eine sich vom Führungszylinder (17) nach außen erstreckende Fläche ist.

10. Pleuel (10, 30) nach einem der vorhergehenden Ansprüche, **dadurch gekennzeichnet, dass** die zweite Anschlagfläche (21) zumindest teilweise durch eine dem ersten Pleuelteil (11) zugewandte Randfläche der Wandung des Führungszylinders (17) gebildet ist.

11. Pleuel (10, 30) nach einem der vorhergehenden Ansprüche, **dadurch gekennzeichnet, dass** die erste Anschlagfläche (20) eine sich vom Führungsschaft (15) nach außen erstreckende Fläche ist.

12. Pleuel (10, 30) nach einem der vorhergehenden Ansprüche, **dadurch gekennzeichnet, dass** der erste Pleuelteil (11) wenigstens zweiteilig ausgebildet ist, wobei der erste Pleuelteil (11) aus wenigstens einem ersten Abschnitt (14) und dem Führungsschaft (15) zusammengesetzt ist, wobei der Führungsschaft (15) im Bereich seines vom zweiten Pleuelteil (12) abgewandten Endes mit dem ersten Abschnitt (14) verbunden ist.

13. Pleuel (10, 30) nach Anspruch 12, **dadurch gekennzeichnet, dass** der Führungsschaft (15) im Bereich seines vom zweiten Pleuelteil (12) abgewandten Endes mit dem ersten Abschnitt (14) verschraubt ist.

14. Pleuel (10, 30) nach Anspruch 12 oder 13, **dadurch gekennzeichnet, dass** die erste Anschlagfläche (20) des ersten Pleuelteils (11) durch eine dem zweiten Pleuelteil (12) zugewandte Randfläche der Wandung einer Bohrung des ersten Abschnitts (14) des ersten Pleuelteils (11) gebildet ist.

15. Pleuel (10) nach einem der Ansprüche 3 bis 14, **dadurch gekennzeichnet, dass** beim Aufliegen der ersten Anschlagfläche (20) auf der zweiten Anschlagfläche (21) eine auf das Pleuel (10) aufgebrachte Druckkraft (F) vollständig am Führungsschaft (15) vorbei über die erste Anschlagfläche (20) und die zweite Anschlagfläche (21) vom ersten Pleuelteil (11) in den zweiten Pleuelteil (12) übertragen wird und/oder umgekehrt.

16. Hubkolbenmaschine, insbesondere Hubkolbenbrennkraftmaschine, mit wenigstens einem Pleuel (10, 30), **dadurch gekennzeichnet, dass** das Pleuel (10, 30) nach einem der Ansprüche 1 bis 15 ausgebildet ist.

17. Fahrzeug mit einer Hubkolbenmaschine, insbesondere mit einer Hubkolbenbrennkraftmaschine, **dadurch gekennzeichnet, dass** die Hubkolbenmaschine, insbesondere die Hubkolbenbrennkraftmaschine, nach Anspruch 16 ausgebildet ist.

## Claims

1. A length-adjustable connecting rod (10, 30) for a reciprocating piston engine, in particular for a reciprocating piston internal combustion engine, wherein the connecting rod (10, 30) comprises at least one first connecting rod part (11) and one second connecting rod part (12), wherein the second connecting rod part (12) has a section with a guide cylinder (17) on its end facing the first connecting rod part (11), wherein the first connecting rod part (11) has a guide shank (15) corresponding in form to the guide cylinder (17) on its end facing the second connecting rod part (12), wherein the guide shank (15) of the first connecting rod part (11) is at least partly accommodated by the guide cylinder (17) in a functional state of use of the connecting rod (10, 30) and is movable relative to same, in particular along a longitudinal axis (L) of the connecting rod (10, 30), for adjusting an effective length of the connecting rod, wherein the first connecting rod part (11) comprises a first stop surface (20) and the second connecting rod part (12) a second stop surface (21), and wherein the first stop surface (20) lying against the second stop surface (21) restricts a relative movement between the first connecting rod part (11) and the second connecting rod part (12) in a first direction,
wherein the connecting rod (10, 30) is designed such that when the first stop surface (20) lies against the second stop surface (21), at least a portion of compressive force (F) acting on the connecting rod (10, 30) along the longitudinal axis (L) of the connecting rod is transferred past the guide shank (15) via the first stop surface (20) and the second stop surface (21) from the first connecting rod part (11) into the second connecting rod part (12) and/or vice versa,
**characterized in that** an effective length (LF) of the guide shank (15) relative to a depth (T) of the guide cylinder (17) is dimensioned such that when the effective connecting rod length (PL) is being shortened, an end of the guide shank (15) facing the second connecting rod part (12) first bottoms with the guide cylinder (17) and afterwards the first stop surface (20) bottoms with the second stop surface (21).

2. The connecting rod (30) according to claim 1 to 13, **characterized in that** the connecting rod (30) is configured such that the first stop surface (20) does not bottom with the second stop surface (21) until a defined compressive force (F) acting on the connecting rod (30) along the longitudinal axis (L) is reached.

3. A length-adjustable connecting rod (10, 30) for a reciprocating piston engine, in particular for a reciprocating piston internal combustion engine, wherein the connecting rod (10, 30) comprises at least one first connecting rod part (11) and one second connecting rod part (12), wherein the second connecting rod part (12) has a section with a guide cylinder (17) on its end facing the first connecting rod part (11), wherein the first connecting rod part (11) has a guide shank (15) corresponding in form to the guide cylinder (17) on its end facing the second connecting rod part (12), wherein the guide shank (15) of the first connecting rod part (11) is at least partly accommodated by the guide cylinder (17) in a functional state of use of the connecting rod (10, 30) and is movable relative to same, in particular along a longitudinal axis (L) of the connecting rod (10, 30), for adjusting an effective length of the connecting rod, wherein the first connecting rod part (11) comprises a first stop surface (20) and the second connecting rod part (12) a second stop surface (21), and wherein the first stop surface (20) lying against the second stop surface (21) restricts a relative movement between the first connecting rod part (11) and the second connecting rod part (12) in a first direction,
wherein the connecting rod (10, 30) is designed such that when the first stop surface (20) lies against the second stop surface (21), at least a portion of compressive force (F) acting on the connecting rod (10, 30) along the longitudinal axis (L) of the connecting rod is transferred past the guide shank (15) via the first stop surface (20) and the second stop surface (21) from the first connecting rod part (11) into the second connecting rod part (12) and/or vice versa,
**characterized in that** the effective length (LF) of the guide shank (15) is of smaller dimension than the depth (T) of the guide cylinder (17) such that before the end of the guide shank (15) facing the second connecting rod part (12) reaching the base of the guide cylinder (17) during the shortening of the effective connecting rod length (PL), the first stop surface (20) rests against the second stop surface (21).

4. The connecting rod (10, 30) according to one of the preceding claims, **characterized in that** the connecting rod (10, 30) is designed such that the first stop surface (20) lying against the second stop surface (21) restricts a relative motion between the first connecting rod part (11) and the second connecting rod part (12) effecting a shortening of the effective connecting rod length.

5. The connecting rod (10, 30) according to one of the preceding claims, **characterized in that** the first connecting rod part (11) and/or the second connecting rod part (12) comprises at least one element of a connecting rod bearing (13, 14), preferably a connecting rod eye (13, 14), wherein the first connecting rod part (11) is constructed to connect to a reciprocating piston of a reciprocating piston internal combustion engine, and wherein the second connecting rod part (12) is constructed to connect to a crankshaft of the reciprocating piston internal combustion engine.

6. The connecting rod (10, 30) according to one of the preceding claims, **characterized in that** the connecting rod (10, 30) comprises a hydraulic length-adjusting device for adjusting the effective connecting rod length, wherein the length-adjusting device comprises at least one hydraulic cylinder (17) having a first hydraulic working chamber (H1) and a second hydraulic working chamber (H2) as well as a piston (15), wherein the piston (15) of the length-adjusting device is part of the first connecting rod part (11) and the hydraulic cylinder (17) is part of the second connecting rod part (12).

7. The connecting rod (10, 30) according to claim 6, **characterized in that** the guide cylinder (17) forms the hydraulic cylinder (17) of the hydraulic length-adjusting device and the guide shank (15) the piston (15) of the length-adjusting device, wherein the piston (15) of the length-adjusting device, in particular the guide shank (15), divides the hydraulic cylinder (17) of the length-adjusting device into the first hydraulic working chamber (H1) and the second hydraulic working chamber (H2).

8. The connecting rod (10, 30) according to claim 7, **characterized in that** the guide shank (15) is designed as a double-acting piston (15), in particular as a double-acting stepped piston (15), and comprises a first effective hydraulic surface (A1) and a second effective hydraulic pressure surface (A2), wherein the first effective hydraulic surface (A1) is allocated to the first hydraulic working chamber (H1) of the length-adjusting device and the second effective hydraulic surface (A2) of the stepped piston (15) to the second hydraulic working chamber (H2), and wherein the size of the second effective hydraulic surface (A2) is at least 0.3 times, preferably at least 0.4 times, particularly at least 0.5 times, preferably at least 0.6 times that of the first effective hydraulic surface (A1).

9. The connecting rod (10, 30) according to one of the preceding claims, **characterized in that** the second stop surface (21) is a surface extending outwardly from the guide cylinder (17).

10. The connecting rod (10, 30) according to one of the preceding claims, **characterized in that** the second stop surface (21) is at least partly formed by an edge surface of the wall of the guide cylinder (17) facing the first connecting rod part (11).

11. The connecting rod (10, 30) according to one of the preceding claims, **characterized in that** the first stop surface (20) is a surface extending outwardly from the guide shank (15).

12. The connecting rod (10, 30) according to one of the preceding claims, **characterized in that** the first connecting rod part (11) is of at least two-part design, wherein the first connecting rod part (11) is comprised of at least one first section (14) and the guide shank (15), wherein the guide shank (15) is connected to the first section (14) in the area of its end opposite the second connecting rod part (12).

13. The connecting rod (10, 30) according to claim 12, **characterized in that** the guide shank (15) is screwed to the first section (14) in the area of its end opposite the second connecting rod part (12).

14. The connecting rod (10, 30) according to claims 12 or 13, **characterized in that** the first stop surface (20) of the first connecting rod part (11) is formed by an edge surface of the wall of a drill hole of the first section (14) of the first connecting rod part (11) facing the second connecting rod part (12).

15. The connecting rod (10) according to one of claims 3 to 14, **characterized in that** a compressive force (F) applied to the connecting rod (10) is completely transferred past the guide shank (15) via the first stop surface (21) and the second stop surface (21) from the first connecting rod part (11) into the second connecting rod part (12) and/or vice versa upon the first stop surface (20) lying against the second stop surface (21).

16. A reciprocating piston engine, in particular a reciprocating piston internal combustion engine, having at least one connecting rod (10, 30), **characterized in that** the connecting rod (10, 30) is designed in accordance with at least one of claims 1 to 15.

17. A vehicle with a reciprocating piston engine, in particular a reciprocating piston internal combustion engine, **characterized in that** the reciprocating piston engine, in particular the reciprocating piston internal combustion engine, is designed in accordance with claim 16.

## Revendications

1. Bielle (10, 30) ajustable en longueur pour un moteur à pistons alternatifs, en particulier pour un moteur à combustion interne à pistons alternatifs, dans laquelle la bielle (10, 30) présente au moins une première partie de bielle (11) et une deuxième partie de bielle (12), dans laquelle la deuxième partie de bielle (12) présente, sur son extrémité tournée vers la première partie de bielle (11), une section avec un cylindre de guidage (17), dans laquelle la première partie de bielle (11) présente, sur son extrémité tournée vers la deuxième partie de bielle (12), une tige de guidage (15) réalisée de manière à correspondre au cylindre de guidage (17), dans laquelle la tige de guidage (15) de la première partie de bielle (11) est logée au moins en partie par le cylindre de guidage (17) dans un état d'utilisation conforme au fonctionnement de la bielle (10, 30) et peut être déplacée par rapport à celui-ci pour ajuster une longueur de bielle active, en particulier le long d'un axe longitudinal (L) de la bielle (10, 30), dans laquelle la première partie de bielle (11) présente une première surface de butée (20) et la deuxième partie de bielle (12) une deuxième surface de butée (21), et dans laquelle le fait que la première surface de butée (20) repose sur la deuxième surface de butée (21) délimite un déplacement relatif entre la première partie de bielle (11) et la deuxième partie de bielle (12) dans une première direction,
dans laquelle la bielle (10, 30) est configurée de telle manière que, lorsque la première surface de butée (20) repose sur la deuxième surface de butée (21), au moins une fraction d'une force de pression (F) agissant sur la bielle (10, 30) le long de l'axe longitudinal de la bielle (L) est transmise le long de la tige de guidage (15) par l'intermédiaire de la première surface de butée (20) et de la deuxième surface de butée (21) depuis la première partie de bielle (11) dans la deuxième partie de bielle (12), et/ou inversement,
**caractérisée en ce que**
une longueur active (LF) de la tige de guidage (15) est dimensionnée par rapport à une profondeur (T) du cylindre de guidage (17) de telle manière que lors de la réduction de la longueur de bielle active (PL), une extrémité, tournée vers la deuxième partie de bielle (12), de la tige de guidage (15) d'abord est compressée à bloc avec le cylindre de guidage (17) puis la première surface de butée (20) est compressée à bloc avec la deuxième surface de butée (21).

2. Bielle (30) selon la revendication 1, **caractérisée en ce que** la bielle (30) est configurée de telle manière que la première surface de butée (20) n'est compressée à bloc avec la deuxième surface de butée (21) qu'une fois une force de pression (F) définie agissant sur la bielle (30) le long de l'axe longitudinal (L) atteinte.

3. Bielle (10, 30) ajustable en longueur pour un moteur à pistons alternatifs, en particulier pour un moteur à combustion interne à pistons alternatifs, dans laquelle la bielle (10, 30) présente au moins une première partie de bielle (11) et une deuxième partie de bielle (12), dans laquelle la deuxième partie de bielle (12) présente, sur son extrémité tournée vers la première partie de bielle (11), une section avec un cylindre de guidage (17), dans laquelle la première partie de bielle (11) présente, sur son extrémité tournée vers la deuxième partie de bielle (12), une tige de guidage (15) réalisée de manière à correspondre au cylindre de guidage (17), dans laquelle la tige de guidage (15) de la première partie de bielle (11) est logée au moins en partie par le cylindre de guidage (17) dans un état d'utilisation conforme au fonctionnement de la bielle (10, 30) et peut être déplacée par rapport à celui-ci pour ajuster une longueur de bielle active, en particulier le long d'un axe longitudinal (L) de la bielle (10, 30), dans laquelle la première partie de bielle (11) présente une première surface de butée (20) et la deuxième partie de bielle (12) une deuxième surface de butée (21), et dans laquelle le fait que la première surface de butée (20) repose sur la deuxième surface de butée (21) limite un déplacement relatif entre la première partie de bielle (11) et la deuxième partie de bielle (12) dans une première direction,
dans laquelle la bielle (10, 30) est configurée de telle manière que lorsque la première surface de butée (20) repose sur la deuxième surface de butée (21), au moins une fraction d'une force de pression (F) agissant sur la bielle (10, 30) le long de l'axe longitudinal de la bielle (L) est transmise le long de la tige de guidage (15) par l'intermédiaire de la première surface de butée (20) et de la deuxième surface de butée (21) depuis la première partie de bielle (11) dans la deuxième partie de bielle (12), et/ou inversement,
**caractérisée en ce que**
la longueur active (LF) de la tige de guidage (15) est dimensionnée plus petite que la profondeur (T) du cylindre de guidage (17) de sorte qu'avant que, lors de la réduction de la longueur de bielle active (PL), l'extrémité, tournée vers la deuxième partie de bielle (12), de la tige de guidage (15) n'atteigne le fond du cylindre de guidage (17), la première surface de bitée (20) repose sur la deuxième surface de butée (21).

4. Bielle (10, 30) selon l'une quelconque des revendications précédentes, **caractérisée en ce que** la bielle (10, 30) est configurée de telle manière que le fait que la première surface de butée (20) repose sur la deuxième surface de butée (21) limite un déplacement relatif entraînant une réduction de la longueur de bielle active entre la première partie de bielle (11) et la deuxième partie de bielle (12).

5. Bielle (10, 30) selon l'une quelconque des revendications précédentes, **caractérisée en ce que** la première partie de bielle (11) et/ou la deuxième partie de bielle (12) présentent au moins un élément d'un coussinet de bielle (13, 14), de préférence un œil de la tête de bielle (13, 14), dans laquelle la première partie de bielle (11) est mise au point pour être reliée à un piston alternatif d'un moteur à combustion interne à pistons alternatifs, et dans laquelle la deuxième partie de bielle (12) est mise au point pour être reliée à un vilebrequin du moteur à combustion interne à pistons alternatifs.

6. Bielle (10, 30) selon l'une quelconque des revendications précédentes, **caractérisée en ce que** la bielle (10, 30) présente un dispositif d'ajustement de longueur hydraulique pour ajuster la longueur de bielle active, dans laquelle le dispositif d'ajustement de longueur présente au moins un cylindre hydraulique (17) avec un premier espace de travail hydraulique (H1) et avec un deuxième espace de travail hydraulique (H2) ainsi qu'avec un piston (15), dans laquelle le piston (15) du dispositif d'ajustement de longueur fait partie de la première partie de bielle (11) et le cylindre hydraulique (17) fait partie de la deuxième partie de bielle (12).

7. Bielle (10, 30) selon la revendication 6, **caractérisée en ce que** le cylindre de guidage (17) forme le cylindre hydraulique (17) du dispositif d'ajustement de longueur hydraulique et la tige de guidage (15) le piston (15) du dispositif d'ajustement de longueur, dans laquelle le piston (15) du dispositif d'ajustement de longueur, en particulier la tige de guidage (15), divise le cylindre hydraulique (17) du dispositif d'ajustement de longueur en le premier espace de travail hydraulique (H1) et en le deuxième espace de travail hydraulique (H2).

8. Bielle (10, 30) selon la revendication 7,
**caractérisée en ce que** la tige de guidage (15) est réalisée en tant que piston agissant sur deux côtés (15), en particulier en tant que piston différentiel agissant sur deux côtés (15), et présente une première surface hydraulique active (A1) et une deuxième surface de pression hydraulique active (A2), dans laquelle la première surface hydraulique active (A1) est associée au premier espace de travail hydraulique (H1) du dispositif d'ajustement de longueur et la deuxième surface hydraulique active (A2) du piston différentiel (15) est associée au deuxième espace de travail hydraulique (H2), et dans laquelle une taille de la deuxième surface hydraulique active (A2) est égale à au moins 0,3 fois, de préférence au moins à 0,4 fois, en particulier au moins à 0,5 fois, de préférence au moins à 0,6 fois, la première surface hydraulique active (A1).

9. Bielle (10, 30) selon l'une quelconque des revendications précédentes, **caractérisée en ce que** la deuxième surface de butée (21) est une surface s'étendant vers l'extérieur depuis le cylindre de guidage (17).

10. Bielle (10, 30) selon l'une quelconque des revendications précédentes, **caractérisée en ce que** la deuxième surface de butée (21) est formée au moins en partie par une surface de bord, tournée vers la première partie de bielle (11), de la paroi du cylindre de guidage (17).

11. Bielle (10, 30) selon l'une quelconque des revendications précédentes, **caractérisée en ce que** la première surface de butée (20) est une surface s'étendant vers l'extérieur depuis la tige de guidage (15).

12. Bielle (10, 30) selon l'une quelconque des revendications précédentes, **caractérisée en ce que** la première partie de bielle (11) est réalisée au moins en deux parties, dans laquelle la première partie de bielle (11) se compose d'au moins une première section (14) et de la tige de guidage (15), dans laquelle la tige de guidage (15) est reliée à la première section (14) dans la zone de son extrémité opposée à la deuxième partie de bielle (12).

13. Bielle (10, 30) selon la revendication 12, **caractérisée en ce que** la tige de guidage (15) est vissée à la première section (14) dans la zone de son extrémité opposée à la deuxième partie de bielle (12).

14. Bielle (10, 30) selon la revendication 12 ou 13, **caractérisée en ce que** la première surface de butée (20) de la première partie de bielle (11) est formée par une surface de bord, tournée vers la deuxième partie de bielle (12), de la paroi d'un alésage de la première section (14) de la première partie de bielle (11).

15. Bielle (10) selon l'une quelconque des revendications 3 à 14, **caractérisée en ce que** lorsque la première surface de butée (20) repose sur la deuxième surface de butée (21), une force de pression (F) appliquée sur la bielle (10) est transmise en totalité le long de la tige de guidage (15) par l'intermédiaire de la première surface de butée (20) et de la deuxième surface de butée (21) depuis la première partie de bielle (11) dans la deuxième partie de bielle (12), et/ou inversement.

16. Moteur à pistons alternatifs, en particulier moteur à combustion interne à pistons alternatifs, avec au moins une bielle (10, 30), **caractérisé en ce que** la bielle (10, 30) est réalisée selon l'une quelconque des revendications 1 à 15.

17. Véhicule avec un moteur à pistons alternatifs, en particulier avec un moteur à combustion interne à pistons alternatifs, **caractérisé en ce que** le moteur à pistons alternatifs, en particulier le moteur à combustion interne à pistons alternatifs, est réalisé selon la revendication 16.
